# EUROPEAN PATENT SPECIFICATION

(11) **EP 2 802 774 B1**
(45) Date of publication and mention of the grant of the patent: **18.05.2016**
(21) Application number: 13701584.8
(22) Date of filing: 11.01.2013
(51) Int. Cl.: F03D 80/00, F03D 9/25, H02K 7/18, H02K 5/18

(54) **COOLING SYSTEM OF A WIND TURBINE**
KÜHLANORDNUNG EINER WINDTURBINE
SYSTÈME DE REFROIDISSEMENT D'UNE ÉOLIENNE

(30) Priority: 13.01.2012 EP 12151131
(43) Date of publication of application: 19.11.2014
(73) Proprietor: youWINenergy GmbH, 26135 Oldenburg (DE)
(72) Inventor: ROHDEN, Rolf, 26607 Aurich (DE)
(74) Representative: Alt, Michael
(86) International application number: PCT/EP2013/050523
(87) International publication number: WO 2013/104777

(56) References cited:
- EP-A1- 2 194 269
- EP-A2- 2 136 077
- WO-A1-02/095222
- WO-A1-2011/031165
- WO-A2-2010/085963
- WO-A2-2011/006810
- DE-A1- 19 636 591
- US-A1- 2005 230 979
- US-A1- 2006 113 804
- US-A1- 2011 140 444
- US-A1- 2011 266 909

## Description

### BACKGROUND

The present subject matter, in general, relates to wind turbines, and, in particular, to a cooling system of a wind turbine.

Such wind turbines which are employed in wind power installations are known in the state of the art. In the recent developments of wind power installations, large scale wind turbines including large scale generators are employed in order to increase rated power output of the wind power installations and to enhance the efficiency of the wind power installations. In order to optimize the efficiency of the wind power installations, such wind turbines are optimally operated at rated power outputs of about 1 MW(el) or more. Consequently, inevitable power losses occurring in such wind turbines must be dealt with. Such power losses appear in the generators in the form of heat which must be transferred to the atmosphere.

In order to dissipate/transfer the heat, cooling systems are employed for wind turbines. Such cooling systems guide the wind stream directed towards the wind turbine, wherein this wind stream is guided or passed through those elements/components to be cooled. As consequence, the air passed through the elements to be cooled is heated and discharged to the atmosphere. DE 196 36 591 A1 discloses a wind turbine having a generator, wherein the generator is constructed with a rotor on the radial outside of the stator. Cooling fins are provided on the radial inside of the stator.

### SUMMARY

The present subject matter relates to an improved cooling system of a wind turbine which provides an optimized cooling efficiency while maintaining the reliability of the wind power installation. Such a cooling system can be employed in large scale wind power installations.

According to the present subject matter, the cooling system of the wind turbine includes a generator, a housing portion and a hub. The hub is rotatable with respect to the housing portion. Further, the hub (interchangeably referred to as rotatable hub) is drivingly connected to the generator. The hub supports at least one blade.

In accordance with an embodiment of the present subject matter, the housing portion and the rotatable hub encloses a cavity for accommodating at least the generator. Further, heat exchange means are provided on an outer surface of the hub for transferring at least a part of heat produced by the generator in operation, to outside atmosphere.

In one embodiment, the cavity defined by the housing portion and the rotatable hub is substantially sealed or sealable to the outside, i.e., cavity is not open to the outside atmosphere for wind streams directed to the housing portion and the rotatable hub. Further, the cavity for accommodating the generator and other equipment is formed by the housing portion as a stationary element, and the hub that is rotatable with respect to the housing portion.

In the context of the present subject matter, the substantially sealed arrangement does not mean that the cavity inside the housing portion and the rotatable hub is completely closed to the outside atmosphere at all times. In particular, pressure release due to temperature differences and/or specific leakages is allowed. However, the sealed arrangement has the effect that the wind stream is not passed into and through the cavity of the wind turbine with the resulting effect to prevent foreign matter such as dust, water or the like from entering the cavity of the wind turbine.

The above concept includes that the cavity defined by the housing portion and the rotatable hub is sealable to the outside. This means in the context of the present subject matter that the cavity can be substantially or completely sealed to the outer atmosphere in a basic operation of the wind power installation while a specific means is provided for disabling the sealed condition, such as a pressure release valve or the like.

According to an embodiment of the present subject matter, the heat exchange means described previously includes at least one fin mounted at one end thereof on the outer surface of the hub with other end extending radially from the outer surface of the hub and forming a free end of the at least one fin. The fin extends substantially upright from the outer surface of the hub.

In said embodiment, at least one fin is employed as the heat exchange means which provides a passive heat transfer with a simple structure. As the hub in the wind turbine represents an element/component which is directly exposed to the wind stream directed towards the wind turbine, i.e., the hub, arranging such a fin on the rotatable hub leads to a remarkable heat transfer increase from the hub through the fin to the atmosphere based on convection using the cooling effect of the fin.

Thus, in the embodiment described previously where the cavity defined by the housing portion and the rotatable hub is a closed or sealed cavity, it is possible to transfer heat from the air inside the cavity though the hub to the outside atmosphere based on the function of the fin.

According to another embodiment of the subject matter, the at least one fin is arranged on the outer surface of the hub on a line or curve which is at least partially inclined or skewed with respect to a rotational axis of the hub. Due to the fact that the hub is rotating in operation of the wind turbine, the arrangement of the fin is adapted to the operation in the direction of the air stream which is guided over the outer surface of the rotating hub. Due to this specific arrangement, the air stream is passed along the surfaces of the fin such that the heat transfer rate is optimized.

According to another embodiment of the present subject matter, the at least one fin is arranged on the outer surface of the hub such that the wind directed towards the hub is guided along the at least one fin substantially in the axial direction of the hub at least in a predetermined operational condition of the wind turbine.

With this arrangement of the fin, the heat transfer rate from the fin to the outside atmosphere is improved by a tangent flow of air along the surface of the fin. As the main purpose of the wind turbine is generating mechanical power based on a torque which is applied to the hub. This specific arrangement of the fin for allowing the tangent flow of air along the fin reduces the effect of the fins on the outer surface of the hub to the torque which can be introduced into the generator. Thus, based on this arrangement, the wind stream has little or no remarkable effect on the torque available at the hub as the fin is arranged on the curve or line which is aligned with the wind stream direction on the hub

According to yet another embodiment of the present subject matter, at least two adjacent fins are provided and spaced from each other in a circumferential direction of the hub by a distance which is larger at the wind downstream side than at the wind upstream side. In said embodiment, at least two fins are provided on the outer surface of the hub. Consequently, the flow of air directed towards the hub is guided between these at least two fins on the surface of the hub. Due to the fact that the flow of air directed to the outer surface of the hub is forced to change its direction, a stall of this flow can occur at a predetermined position on the outer surface of the hub. Thus, the at least two adjacent fins are spaced from each other in a circumferential direction of the hub by a distance which is larger at the wind downstream side of the fins than at the wind upstream side such that the velocity of the flow in the boundary layer is decreased in the course of this flow along the hub due to the increase of the passage area between the fins. Consequently, the stall of the flow is reduced or even eliminated. As a consequence, so called dead water areas are reduced or even eliminated, which increases the heat transfer rate from the hub to the outside atmosphere. Moreover, the noise generation is reduced as the flow of air is less disturbed. This concept can be applied to three fins wherein the distance between each two of the three fins is in accordance with the above described form. The number of fins is not restricted to any number and two, three or a plurality of fins can be provided.

According to an embodiment of the present subject matter, each fin is formed as an element which is separate from the hub and mountable to the hub. According to this concept, the fin can be transported to the construction site as separate element and can be mounted to the outer surface of the hub at the construction site such that the concept of the fin can be employed even for large scale wind turbine installations without introducing transportation problems.

In said embodiment, the fin can be screwed by bolts or other means to the outer surface of the hub. Care must be taken that the heat transfer from the outer surface of the hub to the fin, in particular, the root or base of the fin is optimized. Such an optimized heat transfer from the hub to the fin can be provided by applying a specific heat transfer medium in the boundary between the fins and the hub as well as an accurate machining of the interface between the outer surface of the hub and the fin.

The cooling system of the present subject matter may further comprises a circulation device for circulating air inside the cavity for increasing the heat transfer rate from the air in the cavity to the outside air or atmosphere. The heat produced inside the cavity based on the operation of the generator is at least in part transferred to the air inside the cavity. Consequently, the heat is transferred to the housing portion and the hub and conducted through the solid substance thereof. Further, the heat is transferred from the outer surface of the housing portion and the hub, in particular, by the fin or the fins to the outside atmosphere. An increased circulation of air inside the cavity increases the heat transfer rate from the heated air inside the cavity to the housing and the hub. As consequence, the overall cooling efficiency can be increased by providing such a circulation device.

The cooling system may further comprise a heat exchanger positioned outside the cavity exchanging heat from a heat transfer fluid to the outside air. The heat transfer fluid may be circulated through the heat exchanger and through a heat absorption section inside the cavity formed by the hub and the housing portion. The heat exchanger may be positioned on said housing portion.

Employing the heat exchanger positioned outside that cavity, in particular, outside the housing portion, enables the arrangement with a sealed or sealable or at least closed cavity and provides a sufficient cooling power for ensuring an efficient and safe operation of the generator.

In one embodiment, the heat absorption section inside the cavity is formed in or close to the generator, for example, in a stator of the generator or close to the stator of the generator. Stationary elements of the generator can be cooled based on a simple structure including radiators or heat exchangers which are operated by a specific fluid. Consequently, the cooling system can be applied to the stator of the generator incorporated in the wind turbine.

In one embodiment, the heat exchanger is positioned in a passage, wherein the passage comprises an aerodynamic arrangement such that air is forced through the heat exchanger. The efficiency of the cooling system which is based on a heat exchanger depends on the properties of fluids flowing through the heat exchanger. That is, the velocity of air guided through or passed by the heat exchanger enhances the efficiency thereof. Consequently, the above concept can enhance the efficiency of the overall cooling system by optimizing the flow of air which is passed through the passage for transferring heat from the heat exchanger in order to cool the fluid circulated in the heat exchanger.

In one embodiment, the aerodynamic arrangement in the passage includes a diffusor formed with an inlet nozzle for concentrating the air flowing into the passage and an outlet nozzle providing a suction effect for the air exiting the passage. As consequence, the air flow rate and, thus, the velocity of this flow guided through the passage is maximized by the aerodynamic arrangement using a diffusor design.

The heat exchanger can be arranged in a top section formed with the passage by structural elements of the top section including a stage supporting auxiliary equipment and/or providing a maintenance stage. Consequently, the arrangements for supporting the heat exchanger can have multiple functions.

In one embodiment, the generator which is used for the wind turbine is formed by an outside rotor and an inside stator, wherein the rotor is connected to the hub and the stator is stationary mounted inside the housing portion. Based on this concept, the rotor is arranged radially outside the stator and mounted to the hub. Consequently, heat produced in the rotor is dissipated in close connection to the hub and can be transferred to the outside atmosphere based on the function of the heat exchange means provided on the outer surface of the hub.

The hub covers, for example, at least a part of the outer circumference of the rotor and the fin or the fins are arranged at least on a surface portion of the hub which axially overlaps the rotor. Based on this concept, the heat transfer efficiency from the outside rotor to the hub can be improved.

In one embodiment, the generator comprises a controlled and active excitation in the rotor. Consequently, according to this concept, the generator comprises an outside rotor which includes means for providing an excitation for the operation of the generator in cooperation with the inside stator. It is known that rotors of the generators having a controlled and active excitation produce a remarkable amount of heat in the rotor due to this excitation. The present subject matter is effectively applicable to such a concept based on the heat exchange means which are provided on the outer surface of the hub for transferring at least a part of heat produced by the generator.

The generator of the wind turbine may comprise means for an active and controlled excitation in that rotor, wherein the rotor is segmentable or separable in at least two sectors and mountable by an assembly of these sectors for providing an operative rotor. By providing a segmentable or separable rotor, optimization of the transportation and delivery of the parts/components of the wind turbine can be achieved. In particular in large scale wind turbine installations, the outside rotor can easily exceed the maximum dimension for a reasonable transportation, e.g. on the road or via railway.

The present subject matter further provides a wind turbine having a generator, a housing portion and a hub, wherein at least one blade is mounted to the hub, wherein the wind turbine has a tower supporting the housing portion and the cooling system as described previously. Further, the present subject matter provides a synchronous generator, in particular for a large scale wind turbine is provided, wherein the synchronous generator comprises a radially outside rotor, a radially inside stator, means for an active and controlled excitation in the rotor. The rotor of said synchronous generator is segmentable or separable in at least two separate sectors and mountable by an assembly of the sectors for providing an operative rotor.

The sectors can be mounted by bolts or equivalent means to a complete rotor, wherein electrical connections of coils of the sectors are established in an assembly of said sectors.

In some of the prior art wind turbines, heat produced by the generator during its operation is dissipated to the outside atmosphere by allowing the wind stream to enter the housing portion for absorbing at least a part of the amount of heat to be dissipated and to discharge the air to the outside atmosphere. Consequently, air which is employed as cooling medium in such prior art wind turbines is allowed to pass through the inner space of the housing portion; and thereby water and foreign matter can enter the housing portion together with the air. This results in an increased risk of damaging the elements inside the housing portion such as the generator.

### BRIEF DESCRIPTION OF THE DRAWINGS

Figure 1 shows a wind turbine having a cooling system according to the present subject matter in an embodiment.
Figure 2 shows the wind turbine of Figure 1 in a side view.
Figure 3 shows the wind turbine of Figure 1 in a front view.

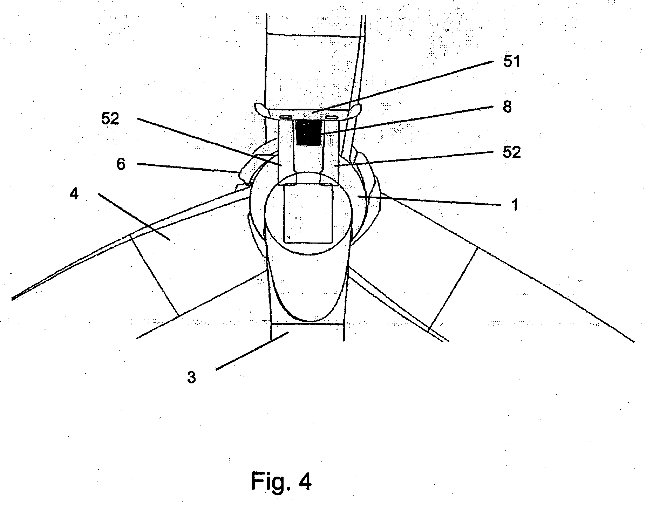

Figure 4 shows the wind turbine of Figure 1 in a rear view.
Figures 5A, 5B, and 5C show a generator formed by an inside stator and an outside rotor in several views which is applicable to the wind turbine according to the embodiment.
In the following, the present subject matter is explained based on specific embodiments. It is noted that the description of the embodiment is only for the purpose of explaining the subject matter. The present subject matter is not limited to the embodiment as shown and explained.

### DESCRIPTION OF THE EMBODIMENTS

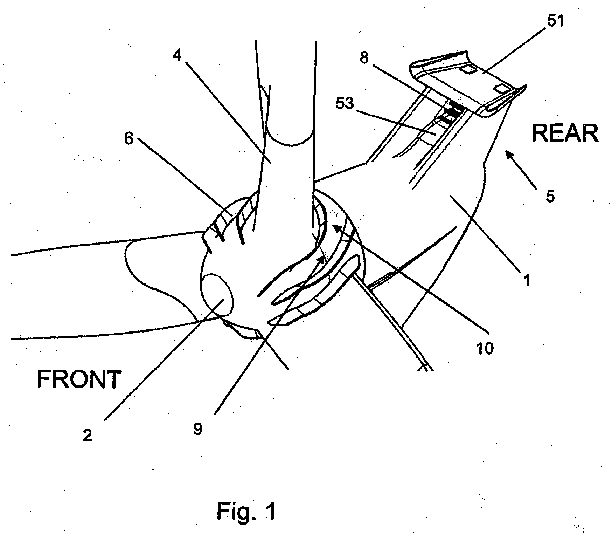

Figure 1 shows a wind turbine having a cooling system according to an embodiment of the present subject matter. The wind turbine comprises a nacelle 1 which forms the housing portion according to the subject matter. Further, in front of the nacelle 1, a hub 2 is arranged. The hub 2 is rotatably mounted to the nacelle 1. In the present embodiment, three blades 4 are arranged at equal angular distances at an outer periphery of the hub 2. On top of the nacelle 1, a top section 5 is arranged which is explained in detail below.

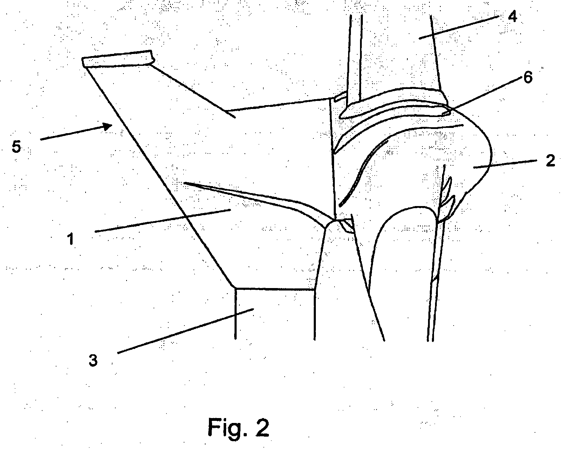

Figure 2 shows the nacelle 1 which is supported on a tower 3, according to an embodiment of the present subject matter. The tower 3 supports the nacelle 1 together with the hub 2 and other equipments rotatably about the longitudinal axis of the tower 3. The wind turbine is arranged such that the wind stream is directed towards the hub 2, wherein the rotational axis of the hub 2 is substantially horizontally directed. A slight inclination of the rotational axis of the hub 2 can be provided such that this rotational axis is slightly tilted upwards in the direction opposing the wind stream direction during operation of the wind turbine. The nacelle 1 is rotatable about the longitudinal axis of the tower 3 in order to adjust the direction of the rotational axis to current wind direction.

In the present embodiment, a plurality of fins 6 is provided on the outer surface of the hub 2. Figure 1 shows three fins 6 between each pair of blades 4. The fins 6 extend from a predetermined region on the hub 2 to the rear side which is directed to the nacelle 1. The fins 6 are mounted on a line or curve on the outer surface of the hub 2, starting from an axial position on the hub 2 which is positioned close to the front end of the hub 2 and extending along the wind stream direction. The specific design and form of the fins 6 are explained below.

A generator 10 is mounted inside the hub 2. In Figure 1, the generator 10 is hidden by the hub 2, and the position of the generator 10 is indicated by an arrow. The axial portion of the hub 2, in which the generator 10, in particular, the rotor thereof is arranged, is illustrated by the line which is indicated by arrow 9. The rotor of the generator 10 is positioned between this line and the axial rear end of the hub 2 at the transition to the nacelle 1 in this embodiment. In the present embodiment, the generator 10 can be represented by a synchronous generator which is formed by an inside stator and an outside rotor. That is, the stator is mounted is mounted in the nacelle 1 as stationary member, whereas the rotor is rotatably held on the outer circumference of the stator. The hub 2 is mounted drivingly to the rotor of the generator 10.

The above explained top section 5 comprises structural members such as side members 52 and a stage 51 on top. Inside the side members 52 and the stage 51, a passage is formed which is further defined by a bottom member 53. Inside the passage, a heat exchanger 8 is arranged which is explained below.

In the following, the basic requirement of cooling a generator of large scale wind turbines is explained. Generators of any type are subject to power losses. Such power losses are produced in the form of heat. The heat must be transferred to the outside atmosphere in order to avoid that the components of the generator exceed a specific temperature.

In outside rotor type generators, a specific amount of heat is produced in the rotor. This applies to permanent magnet systems as well as actively excited outside rotors of synchronous generators. The increased demand for permanent magnet systems has resulted in the specific demand of high efficiency synchronous generators which employ an outside rotor.

In accordance with the present subject matter, the nacelle 1 as housing portion and the hub 2 forms a casing. This casing provides a cavity, which is closed or sealed in relation to the outside atmosphere. This arrangement provides a closed space in which critical elements can be accommodated, such as electric components of the generator 10 and bearing systems for the rotor. The hub 2 and the nacelle 1 are provided with a specific labyrinth seal or packing in order to provide a rotatable member in the form of the hub 2 while maintaining the cavity inside the nacelle 1 and the hub 2 in sufficiently closed condition. Such an arrangement provides an increased service time and a reduced maintenance demand of the components inside the casing of the wind turbine. Moreover, simplified arrangements can be employed due to the fact that water and foreign matter such as dust and the like is prevented from entering the inner space of the wind turbine. The embodiment is not restricted to the labyrinth seal and any type of sealing system can be arranged in the transition of the hub 2 and the nacelle 1 as long as the sufficiently closed condition of the casing or cavity is achieved.

In order to handle the heat produced due to the power losses of the generator 10, the present embodiment employs a specific heat exchange means on the outer surface of the hub 2. As shown in Figures 1-3, the fins 6 are provided on the outer surface of the hub 2. The heat transfer from the inner space enclosed by the nacelle 1 and the hub 2 to the outside is possible by a combination of convection inside and outside the hub 2 and heat conduction through the material forming the hub 2. The fins 6 on the outer surface of the hub 2 contribute to an increase in the heat transfer rate from the inside to the outside atmosphere. As consequence, it is possible to provide a closed or sealed cavity formed or defined by the hub 2 and the nacelle 1 while heat produced by the generator 10 can be transferred to the outside atmosphere by the fins 6 which represent passive elements, which do not need any control or maintenance. Due to the fact that the power loss in the generator 10 applied to the wind turbine depends on the power output which, in turn, depends on the wind conditions, the passive system of this embodiment provides specific advantages. That is, in conditions with high wind speed, the amount of heat which is to be transferred from the cavity to the outer atmosphere is large. In such conditions, the amount of heat transferred through the hub 2, in particular, using the fins 6 is large. In conditions with low wind speeds, the amount of heat to be transferred from the cavity to the outer atmosphere is low. In such conditions, the heat transfer rate of the fins 6 is sufficient.

As shown in Figure 1, the fins 6 are arranged on a line or curve on the outer surface of the hub which is inclined or skewed with respect to the rotational axis of the hub 2. In the specific arrangement in this embodiment, the curve on which the fins are arranged is such that the wind stream which is guided on the surface of the hub 2 is basically tangent to the side surfaces of the fins 6 taking into account the rotational movement of the hub 2 and the wind stream on the surface of the hub 2. As consequence, the fins 6 are arranged such that the side surfaces of the fins 6 do not reduce or counteract the torque of the hub 2 which is produced by the effect of the blades 4 of the rotor. Therefore, the fins 6 at least do not remarkable reduce the rated output of the wind turbine due to this specific design. Of course, the curve of line at which the fins 6 are mounted to the hub 2 refer to geometry only and the actual fins 6 are mounted in specific areas having a specific extension in the width direction of the fins 6.

As shown in Figure 1, three fins 6 are provided between a pair of blades 4. The space or distance between the fins 6, i.e. a pair of fins 6 is configured in a specific manner as explained below. Between each pair of fins 6 the distance is arranged such that the fins 6 are spaced at the wind upstream side with a smaller distance than at the wind downstream side. That is, the distance between two fins 2 is greater at the rear side of the wind turbine than at the front side. Based on this arrangement, the velocity of flowing air which is guided on the surface of the hub 2 is decreased in the course of flowing over the hub 2 such that a stall of the flow of air can be reduced or even eliminated. As consequence, the flow of air is maintained close to the surface of the hub 2 and the surface of the fins 6. This arrangement further enhances the heat transfer rate of the heat exchange means formed by the fins 6 on the hub 2. As shown in Figure 1 and Figure 2, the fins 6 extend on the hub 2 in the axial direction from a specific range to the end of the hub 2 at the rear side or the wind downstream side. Due to the fact that the outside rotor of the generator 10 is provided in the inner periphery of the hub 2, as shown in Figure 1, it is possible to further enhance the heat transfer rate of the heat exchange means based on the fins 6 by extending the fins 6 to a greater axial distance than the rotor.

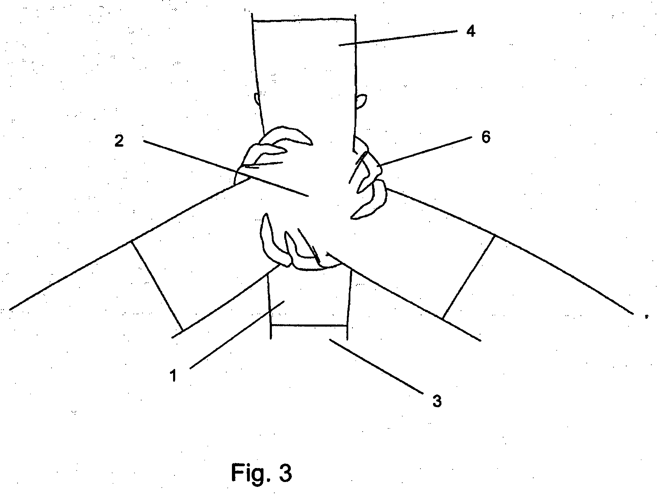

Figure 3 shows the wind turbine in a front view. The fins 6 are shown as tapered elements which are mounted on the curve or line as described above. In order to optimize the aerodynamics of the wind power installation, the height at which the fins 6 extend from the outer surface of the hub 2 is not constant at the entire axial length of the fins 6 and is rather gently reduced at the axial ends thereof.

According to an embodiment of the present subject matter, an active cooling system is employed which is based on a fluid driven heat transfer system. As shown in Figure 1, the top section 5 comprises a heat exchanger 8. The heat exchanger 8 is adapted to cool a fluid such as a liquid like oil or the like, which is passed through this heat exchanger 8. The fluid is circulated through this heat exchanger 8 on one side and through a heat abortion section inside the casing which is formed by the hub 2 and the nacelle 1. This heat absorption section can be formed by a radiator or heat exchanger which is provided e.g. in or close to the stator of the generator 10. As alternative, the stator of the generator 10 can be provided with passages for directly cooling the stator.

As shown in Figure 1, the heat exchanger 8 is provided in a passage which is formed in the top section 5 which is constructed by the side members 52 and the stage 51 as well as a bottom section 53. The heat exchanger 8 in this passage is arranged in an area where the flow of air based on the wind stream is concentrated due to an inlet nozzle which is formed by a reduced cross sectional area based on the specific form of the side members 52 and the bottom section 53. At the end of this passage, an outlet is formed with an increased cross sectional area such that a diffusor is formed in the passage which contributes to a guidance air flow through this passage such that the cooling rate of the heat exchanger 8 is increased.

The fluid which is used in this cooling system is transported by a pump and circulates through the heat exchanger 8 and the heat absorption section inside the casing.

Due to the fact that the heat transfer rate in such systems based on a passage including a heat exchanger 8 of the gas-liquid-type depends on the wind speed, the heat transfer rate is always in the appropriate proportion based on the wind speed and the relative power loss created in the form of heat.

Further, an active flow of air inside the closed or sealed cavity formed by the hub 2 and the nacelle 1 can be provided. This active flow can be realized by a fan or the like inside the cavity in order to increase the heat transfer rate from the inner air of the cavity to the material forming the hub 2 and the nacelle 1.

The present subject matter is in particular advantageous for wind power installations which employ active and controlled synchronous generators with outside rotors and inside stators. In such cases, the active excitation in the rotor, in particular, the coils thereof, leads to an increased heat production which must be dealt with. Therefore, the system using the exchange means on the outer surface of the hub 2 is very effective. Furthermore, the supplemented fluid based cooling system using the heat exchanger 8 in the top section 5 according to the above modified embodiment further enables the specific design using a closed or sealed cavity inside the casing formed by the hub 2 and the nacelle 1. As consequence, this synergistic effect leads to a simplified arrangement and an increased safety in relation to temperature control. Further, the service time of such wind turbines can be increased due to the closed casing while the entrance of water and foreign matter is prevented.

Furthermore, the top section 5 which supports the heat exchanger 8 inside the passage can be used for additional equipment such as positioning lights and maintenance devices. Therefore, the entire system provides a complete novel concept for cooling a large scale wind turbine wherein some sections of this cooling system are useful for additional purposes.

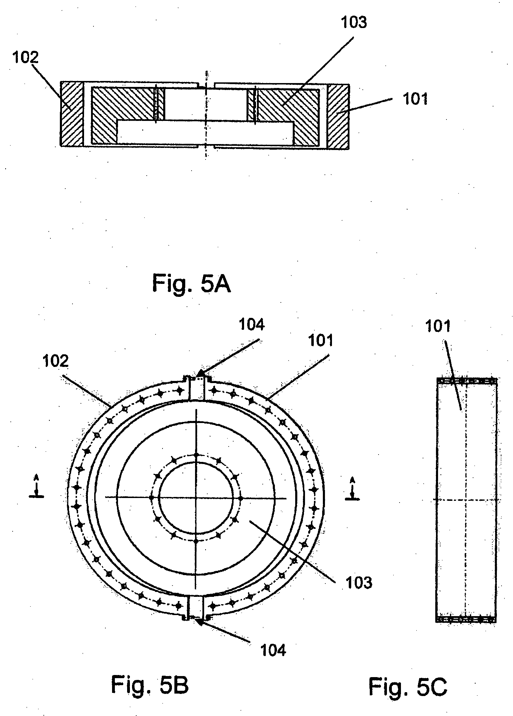

Figures 5A, 5B and 5C illustrate another embodiment of the generator. Figure 5A shows a generator which is formed by an outside rotor and an inside stator 103. As shown in figure 5B, the outside rotor is segmentable or separable in two sectors 101 and 102. In Figure 5A and figure 5B, the inner stator 103 is shown as complete element. The outside rotor is mountable at the interfaces 104 by bolts in order to provide a complete rotor.

In said embodiment, the outside rotor forming the largest component of such a generator is segmentable into at least two sections in order to reduce the restrictions relating to transportation. The outside rotor is an active and controlled rotor for a synchronous generator and includes means for connecting the electric system at the interfaces of the sectors 101 and 102. Further, means for mounting the sectors by bolts are provided such that the outside rotor can be mounted at the construction side after the transportation. The number of the sectors can be adapted to the requirements such that the transportation of the sectors of optimized. In particular, the number of sectors can be more than two, e.g. three, four or even more.

As already noted, the above concept of the segmentable or separable outside rotor of a synchronous generator is independent and definitely not essential for the cooling concept defined above. Rather, the above cooling concept of the subject matter can be applied to any type of generator systems including permanent magnet generators, the above discussed synchronous generators, generators coupled to the wind turbine rotor via a transmission, generators with inside rotors or outside rotors. Further, the numbers as indicated above are not restrictive and any number of blades or fins can be employed as long as the effects of the subject matter are achieved.

## Claims

1. A cooling system of a wind turbine comprising:
a generator (10);
a housing portion (1); and
a hub (2) rotatable with respect to the housing portion (1) and drivingly connected to the generator (10), said hub (2) supporting at least one blade (4);
wherein said housing portion (1) and said hub (2) enclose a cavity for accommodating at least said generator(10); and
wherein heat exchange means are provided on an outer surface of said hub (2) for transferring at least a part of heat produced by said generator (10) in operation to outside,
wherein said heat exchange means comprise at least one fin (6) mounted at one end thereof on the outer surface of said hub (2) with the other end thereof extending radially from said surface of said hub (2) and forming a free end of said at least one fin (6),
wherein said at least one fin (6) is arranged on the outer surface of said hub (2) on a line or curve which is at least partially inclined or skewed with respect to a rotational axis of said hub (2), and
wherein said at least one fin (6) is arranged on the outer surface of said hub (2) such that the wind directed towards the hub (2) is guided along the at least one fin (6) substantially in the axial direction of the hub (2) at least in a predetermined operational condition of the wind turbine.

2. The cooling system as claimed in claim 1,
wherein said cavity defined by said housing portion (1) and said rotatable hub (2) is substantially sealed or sealable to the outside.

3. The cooling system as claimed in any of the claims 1 and 2,
wherein at least two adjacent fins (6) are provided and spaced from each other in a circumferential direction of said hub (2) by a distance which is larger at the wind downstream side than at the wind upstream side.

4. The cooling system as claimed in any of the claims 1 to 3,
wherein each fin (6) is formed as an element which is separate from the hub (2) and mountable to said hub (2).

5. The cooling system as claimed in any of the preceding claims, further comprising a circulation device for circulating air inside said cavity for increasing the heat transfer rate from the air in said cavity to the outside.

6. The cooling system as claimed in any of the preceding claims, further comprising a heat exchanger (8) positioned outside said cavity exchanging heat from a heat transfer fluid to the outside.

7. The cooling system as claimed in claim 6, wherein said heat transfer fluid is circulated through said heat exchanger (8) and through a heat absorption section inside said cavity defined by said hub (2) and said housing portion (1).

8. The cooling system as claimed in any of claims 6 and 7, wherein said heat exchanger (8) is positioned on said housing portion (1).

9. The cooling system as claimed in any of claims 6 to 8,
wherein said heat absorption section inside said cavity is formed in or close to said generator (10), preferably in or close to a stator of said generator (10).

10. The cooling system as claimed in any of claims 6 to 9,
wherein said heat exchanger (8) is positioned in a passage, wherein said passage comprises an aerodynamic arrangement such that air is forced through said heat exchanger (8).

11. The cooling system as claimed in claim 10,
wherein said aerodynamic arrangement includes a diffusor formed with an inlet nozzle for concentrating the air flowing into the passage and an outlet nozzle providing a suction effect for the air exiting the passage.

12. The cooling system as claimed in any of the claims 6 to 11,
wherein said heat exchanger is arranged in a top section (5) mounted on top of the housing portion (1) formed with said passage by structural elements (51, 52, 53) of said top section (5) including a stage (51) supporting auxiliary equipment and/or providing a maintenance stage.

13. The cooling system as claimed in any of the preceding claims,
wherein the generator (10) is formed by an outside rotor and an inside stator,
wherein said rotor is connected to said hub (2) and the stator is stationary mounted inside the housing (1).

14. The cooling system as claimed in claim 13, wherein said hub (2) covers at least a part of the outer circumference of said rotor and the fins (6) are arranged at least on a surface portion of said hub (2) which axially overlaps the rotor.

15. The cooling, system as claimed in any of the preceding claims,
wherein said generator (10) comprises a controlled and active excitation type rotor.

16. A wind turbine comprising a generator (10), a housing portion (1) and a hub (2),
wherein at least one blade (4) is mounted to the hub (2), said wind turbine having a tower (3) supporting said housing (1) and a cooling system as defined in at least one of the preceding claims.

17. The wind turbine as claimed in claim 16, wherein said generator (10) comprises means for an active and controlled excitation in said rotor, wherein said rotor is segmentable or separable in at least two separate sectors and mountable by an assembly of said sectors for providing an operative rotor.

## Patentansprüche

1. Kühlsystem einer Windturbine, umfassend:
einen Generator (10);
einen Gehäuseabschnitt (1); und
eine Nabe (2), die drehbar in Bezug auf den Gehäuseabschnitt (1) ist und antriebswirksam mit dem Generator (10) verbunden ist, wobei die Nabe (2) mindestens ein Rotorblatt (4) abstützt;
wobei der Gehäuseabschnitt (1) und die Nabe (2) einen Hohlraum zur Aufnahme mindestens des Generators (10) einschließen; und
wobei Wärmetauschmittel an einer äußeren Oberfläche der Nabe (2) zum Übertragen mindestens eines Teils von Wärmeenergie nach außen bereitgestellt sind, die von dem Generator (10) im Betrieb erzeugt wird,
wobei die Wärmeaustauschmittel mindestens eine Rippe (6) umfassen, die an einem Ende davon an der äußeren Oberfläche der Nabe (2) montiert ist, wobei sich das andere Ende davon radial von der Oberfläche der Nabe (2) erstreckt und ein freies Ende der mindestens einen Rippe (6) bildet,
wobei die mindestens eine Rippe (6) an der äußeren Oberfläche der Nabe (2) auf einer Linie oder Kurve angeordnet ist, die mindestens teilweise in Bezug auf die Drehachse der Nabe (2) geneigt oder abgeschrägt ist, und
wobei die mindestens eine Rippe (6) auf der äußeren Oberfläche der Nabe (2) derart angeordnet ist, dass Wind, der zu der Nabe (2) geleitet wird, entlang der mindestens einen Rippe (6) im Wesentlichen in axialer Richtung der Nabe (2) mindestens unter einer vorbestimmten Betriebsbedingung der Windturbine geleitet wird.

2. Kühlsystem nach Anspruch 1,
wobei der Hohlraum, der durch den Gehäuseabschnitt (1) und die drehbare Nabe (2) definiert wird, im Wesentlichen zur Außenseite hin abgedichtet oder abdichtbar ist.

3. Kühlsystem nach einem der Ansprüche 1 und 2,
wobei mindestens zwei benachbarte Rippen (6) bereitgestellt sind und voneinander in eine Umfangsrichtung der Nabe (2) mit einem Abstand beabstandet sind, der an der windstromabwärtigen Seite größer als an der windstromaufwärtigen Seite ist.

4. Kühlsystem nach einem der Ansprüche 1 bis 3,
wobei jede Rippe (6) als ein Element ausgebildet ist, das von der Nabe (2) separat ist und an der Nabe (2) montiert werden kann.

5. Kühlsystem nach einem der vorhergehenden Ansprüche, ferner umfassend eine Zirkulationseinrichtung zum Zirkulieren von Luft innerhalb des Hohlraums zum Erhöhen des Wärmeübergangskoeffizienten von Luft im Hohlraum zur Außenseite.

6. Kühlsystem nach einem der vorhergehenden Ansprüche, ferner umfassend einen Wärmetauscher (8), der außerhalb des Hohlraums angeordnet ist, der Wärmeenergie aus einem Wärmetauscherfluid mit der Außenseite austauscht.

7. Kühlsystem nach Anspruch 6, wobei das Wärmeübertragungsfluid durch den Wärmetauscher (8) und durch einen Wärmeabsorptionsabschnitt innerhalb des Hohlraums zirkuliert, der durch die Nabe (2) und den Gehäuseabschnitt (1) definiert wird.

8. Kühlsystem nach einem der Ansprüche 6 und 7, wobei der Wärmetauscher (8) am Gehäuseabschnitt (1) angeordnet ist.

9. Kühlsystem nach einem der Ansprüche 6 bis 8,
wobei der Wärmeabsorptionsabschnitt innerhalb des Hohlraums in oder in der Nähe des Generators (10) ausgebildet ist, vorzugsweise in oder in der Nähe eines Stators des Generators (10).

10. Kühlsystem nach einem der Ansprüche 6 bis 9,
wobei der Wärmetauscher (8) in einem Durchgang angeordnet ist, wobei der Durchgang eine aerodynamische Anordnung umfasst, sodass die Luft durch den Wärmetauscher (8) gedrängt wird.

11. Kühlsystem nach Anspruch 10,
wobei die aerodynamische Anordnung einen Diffusor aufweist, der mit einer Einlassdüse zum Konzentrieren der Luft, die in den Durchgang strömt, und einer Ausgangsdüse, die einen Ansaugeffekt für die Luft bereitstellt, die durch den Durchgang austritt. ausgebildet ist.

12. Kühlsystem nach einem der Ansprüche 6 bis 11,
wobei der Wärmetauscher in einem oberen Abschnitt (5) angeordnet ist, der auf der Oberseite des Gehäuseabschnitts (1) montiert ist, der mit dem Durchgang durch Strukturelemente (51, 52, 53) des oberen Abschnitts (5) ausgebildet ist und eine Plattform (51) aufweist, welche die Hilfsausrüstung abstützt und/oder eine Wartungsplattform bereitstellt.

13. Kühlsystem nach einem der vorhergehenden Ansprüche,
wobei der Generator (10) von einem Außenrotor und einem Innenstator gebildet wird, wobei der Rotor mit der Nabe (2) verbunden ist und der Stator stationär innerhalb des Gehäuses (1) montiert ist.

14. Kühlsystem nach Anspruch 13, wobei die Nabe (2) mindestens einen Teil des Außenumfangs des Rotors bedeckt und die Rippen (6) mindestens auf einem Oberflächenabschnitt der Nabe (2) angeordnet sind, die den Rotor axial überschneidet.

15. Kühlsystem nach einem der vorhergehenden Ansprüche,
wobei der Generator (10) einen gesteuerten ("controlled") und aktiven Erregerrotor umfasst.

16. Windturbine, umfassend einen Generator (10), einen Gehäuseabschnitt (1) und eine Nabe (2), wobei mindestens ein Rotorblatt (4) an der Nabe (2) montiert ist, wobei die Windturbine einen Turm (3), der das Gehäuse (1) abstützt, und ein Kühlsystem nach mindestens einem der vorhergehenden Ansprüche aufweist.

17. Windturbine nach Anspruch 16, wobei der Generator (10) Mittel für eine aktive und gesteuerte ("controlled") Erregung in dem Rotor umfasst, wobei der Rotor in mindestens zwei getrennte Abschnitte segmentierbar oder trennbar ist und durch eine Anordnung der Abschnitte zum Bereitstellen eines operativen Rotors montierbar ist.

## Revendications

1. Système de refroidissement d'une éolienne comprenant :
une génératrice (10) ;
une partie logement (1) ; et
un moyeu (2) rotatif par rapport à la partie logement (1) et raccordé à des fins d'entraînement à la génératrice (10), ledit moyeu (2) supportant au moins une pale (4) ;
dans lequel ladite partie logement (1) et ledit moyeu (2) délimitent une cavité destinée à recevoir au moins ladite génératrice (10) ; et
dans lequel des moyens d'échange de chaleur sont prévus sur une surface extérieure dudit moyeu (2) afin de transférer au moins une partie de la chaleur, produite par ladite génératrice (10) lors du fonctionnement, vers l'extérieur,
dans lequel lesdits moyens d'échange de chaleur comprennent au moins un aileron (6) monté au niveau d'une extrémité de celui-ci sur la surface extérieure dudit moyeu (2), l'autre extrémité de celui-ci s'étendant radialement à partir de ladite surface dudit moyeu (2) et formant une extrémité libre dudit ou desdits ailerons (6),
dans lequel ledit ou lesdits ailerons (6) sont disposés sur la surface extérieure dudit moyeu (2) sur une ligne ou une courbe qui est au moins partiellement inclinée ou oblique par rapport à un axe de rotation dudit moyeu (2), et
dans lequel ledit ou lesdits ailerons (6) sont disposés sur la surface extérieure dudit moyeu (2) de telle sorte que le vent dirigé vers le moyeu (2) est guidé le long dudit ou desdits ailerons (6) essentiellement dans la direction axiale du moyeu (2) au moins dans des conditions de fonctionnement prédéterminées de l'éolienne.

2. Système de refroidissement selon la revendication 1,
dans lequel ladite cavité définie par ladite partie logement (1) et ledit moyeu (2) rotatif est essentiellement hermétique ou peut être rendue hermétique vis-à-vis de l'extérieur.

3. Système de refroidissement selon l'une quelconque des revendications 1 et 2,
dans lequel au moins deux ailerons (6) adjacents sont prévus et espacés l'un de l'autre dans une direction circonférentielle dudit moyeu (2) d'une distance qui est plus grande du côté aval du vent que du côté amont du vent.

4. Système de refroidissement selon l'une quelconque des revendications 1 à 3,
dans lequel chaque aileron (6) est réalisé sous la forme d'un élément qui est distinct du moyeu (2) et qui peut être monté sur ledit moyeu (2).

5. Système de refroidissement selon l'une quelconque des revendications précédentes,
comprenant en outre un dispositif de circulation servant à faire circuler de l'air à l'intérieur de ladite cavité afin d'augmenter le coefficient de transfert de chaleur depuis l'air situé dans ladite cavité vers l'extérieur.

6. Système de refroidissement selon l'une quelconque des revendications précédentes,
comprenant en outre un échangeur de chaleur (8) positionné à l'extérieur de ladite cavité et échangeant de la chaleur depuis un fluide de transfert de chaleur vers l'extérieur.

7. Système de refroidissement selon la revendication 6,
dans lequel ledit fluide de transfert de chaleur est amené à circuler à travers ledit échangeur de chaleur (8) et à travers une section d'absorption de chaleur à l'intérieur de ladite cavité définie par ledit moyeu (2) et ladite partie logement (1).

8. Système de refroidissement selon l'une quelconque des revendications 6 et 7,
dans lequel ledit échangeur de chaleur (8) est positionné sur ladite partie logement (1).

9. Système de refroidissement selon l'une quelconque des revendications 6 à 8,
dans lequel ladite section d'absorption de chaleur à l'intérieur de ladite cavité est formée dans ou à proximité de ladite génératrice (10), de préférence dans ou à proximité d'un stator de ladite génératrice (10).

10. Système de refroidissement selon l'une quelconque des revendications 6 à 9,
dans lequel ledit échangeur de chaleur (8) est positionné dans un passage, dans lequel ledit passage comprend une structure aérodynamique de telle sorte que l'air soit amené à passer de force à travers ledit échangeur de chaleur (8).

11. Système de refroidissement selon la revendication 10,
dans lequel ladite structure aérodynamique comprend un diffuseur formé de manière à comporter une buse d'entrée servant à concentrer l'air s'écoulant dans le passage et une buse de sortie produisant un effet d'aspiration pour l'air sortant du passage.

12. Système de refroidissement selon l'une quelconque des revendications 6 à 11,
dans lequel ledit échangeur de chaleur est disposé dans une section supérieure (5) montée au-dessus de la partie logement (1) formée de manière à comporter ledit passage par des éléments structurels (51, 52, 53) de ladite section supérieure (5) comprenant une plateforme (51) supportant un équipement auxiliaire et/ou constituant une plateforme d'entretien.

13. Système de refroidissement selon l'une quelconque des revendications précédentes,
dans lequel la génératrice (10) est formée par un rotor extérieur et un stator intérieur,
dans lequel ledit rotor est raccordé audit moyeu (2) et le stator est monté de façon stationnaire à l'intérieur du logement (1).

14. Système de refroidissement selon la revendication 13,
dans lequel ledit moyeu (2) recouvre au moins une partie de la circonférence extérieure dudit rotor et les ailerons (6) sont disposés au moins sur une partie de surface dudit moyeu (2) qui chevauche axialement le rotor.

15. Système de refroidissement selon l'une quelconque des revendications précédentes,
dans lequel ladite génératrice (10) comprend un rotor du type à excitation régulée et active.

16. Éolienne comprenant une génératrice (10), une partie logement (1) et un moyeu (2), dans laquelle au moins une pale (4) est montée sur le moyeu (2), ladite éolienne comportant une tour (3) supportant ledit logement (1) et un système de refroidissement tel que défini dans au moins une des revendications précédentes.

17. Éolienne selon la revendication 16, dans laquelle ladite génératrice (10) comprend des moyens servant à l'excitation active et régulée dudit rotor, dans laquelle ledit rotor peut être segmenté ou divisé en au moins deux parties distinctes et peut être monté par un assemblage desdites parties afin de former un rotor opérationnel.
